# EUROPEAN PATENT APPLICATION

(11) **EP 3 088 288 A2**
(43) Date of publication of application: **02.11.2016**
(21) Application number: 16165858.8
(22) Date of filing: 18.04.2016
(51) Int. Cl.: B62M 9/16, B62J 13/02

(54) **ELECTRIC VEHICLE**

(30) Priority: 28.04.2015 JP 2015092146
(71) Applicant: Yamaha Hatsudoki Kabushiki Kaisha, Iwata-shi, Shizuoka-ken 438 (JP)
(72) Inventor: MIYASHIRO, Shidehiko, Japan, 438-8501 (JP)
(74) Representative: Moreland, David

(57) **Abstract**

An electric vehicle (1) has a vehicle body frame (2), a swing arm (7) supported on the vehicle body frame (2) via a pivot shaft (6) so as to swing in the up-down direction, a rear wheel (8) supported on the swing arm (7), an electric motor (31), an output shaft (35) to which a driving force of the electric motor (31) is transmitted, an endless transmission member (72) for transmitting a driving force outputted from the output shaft (35) to the rear wheel (8), a battery (23) for supplying power to the electric motor (31), and a battery case (20) for storing the battery (23). The output shaft (35) is positioned lower than the lower end of the battery case (20) and more forward than the rear end of the battery case (20) in a side view. A movement restriction member (9) for touching the transmission member (72) to restrict upward movement of the transmission member (72) is mounted on the vehicle body frame (2) or a member fixed to the vehicle body frame (2). With the above, it is possible to reduce the size without deteriorating the riding comfortability and the battery capacity.

## Description

### FIELD OF INVENTION

The present invention relates to an electric vehicle, and in particular, though not exclusively, to a straddled electric vehicle.

### BACKGROUND TO INVENTION

WO2013/061484 (KAWASAKI) discloses an electric motorcycle having a battery case for storing a battery, positioned near the middle of the motorcycle in the front-back direction. Similar to a typical motorcycle, the electric motorcycle has a swing arm that is supported so as to swing relative to a vehicle body frame and that transmits a driving force to the rear wheel via an endless transmission member such as a chain, or the like.

In the electric motorcycle disclosed in WO2013/061484, in order to ensure a range of movement of the transmission member that moves following the up-down movement of the swing arm, it is necessary to ensure clearance by mounting the battery case far ahead of or above the transmission member. This makes it difficult to achieve size reduction. In reality, according to WO2013/061484, the battery case is mounted so as to be displaced in the forward direction relative to the motor case, and this results in a vehicle that is relatively long.

It is possible to seek to ensure clearance between the battery case and the transmission member by limiting the movement range of the swing arm by limiting the expansion and contraction amount of the suspension. In this case, however, riding comfort may deteriorate. Still further, it is possible to ensure clearance between the battery case and the transmission member by reducing the size of the battery case. In this case, however, decreased capacity of the battery and thus a shorter traveling distance may result.

The present invention has been conceived in view of the above, and aims to seek to provide an electric vehicle of which a size is reduced without deterioration of riding comfort and/or battery capacity.

It is an object of at least one embodiment of at least one aspect of the present invention to obviate or at least mitigate one or more problems or disadvantages in the prior art.

### SUMMARY OF INVENTION

Various aspects of the present invention are defined in the independent claims appended hereto. Some optional and/or preferred features are defined in the dependent claims appended hereto.

According to an aspect of the present invention there is provided an electric vehicle.

The electric vehicle may comprise a vehicle body frame.

The electric vehicle may comprise a swing arm which may be supported on the vehicle body frame, for example, via a pivot shaft so as to swing in an up-down direction.

The electric vehicle may comprise a rear wheel supported on the swing arm.

The electric vehicle may comprise an electric motor.

The electric vehicle may comprise an output shaft to which a driving force of the electric motor may be transmitted.

The electric vehicle may comprise an endless transmission member, for example, for transmitting a driving force outputted from the output shaft to the rear wheel.

The electric vehicle may comprise a battery, for example, for supplying power to the electric motor.

The electric vehicle may comprise a battery case, for example, for storing the battery.

The output shaft may be positioned lower than the lower end of the battery case and/or more forward than the rear end of the battery case in a side view.

A movement restriction member that may touch the transmission member to thereby restrict upward movement of the transmission member may be mounted on the vehicle body frame or a member fixed to the vehicle body frame.

According to the present invention, even in the case where the output shaft may be positioned lower than the lower end of the battery case and more forward than the rear end of the battery case in a side view, as the movement restriction member may be provided, it is possible to prevent the battery case from touching the transmission member. This may make it possible to reduce the size without deteriorating the riding comfortable and/or the battery capacity. The pivot shaft may be positioned lower than the lower end of the battery case and/or more forward than the rear end of the battery in a side view.

The transmission member and the battery case may at least partially overlap to each other in a plan view.

The movement restriction member may touch the transmission member at a position more rearward than the rear end of the battery case.

The electric vehicle may further comprise a suspension which may be positioned between the vehicle body frame and the swing arm.

The movement restriction member may touch the transmission member, for example, at least when the suspension may be in a most contracted state.

The movement restriction member may be positioned lower than the battery case in a circumferential direction with the output shaft as a center.

The vehicle body frame may include a rear frame which may be diagonally extending rearward and upward from a position behind the battery case.

The movement restriction member may be mounted on a front end portion of the rear frame.

The movement restriction member may be mounted on the battery case.

The electric vehicle may further comprise a motor case for storing the electric motor. A lower edge of the battery case and an upper edge of the motor case may be put together or may be adjacent to or in abutment with one another.

The electric vehicle may further comprise a motor case for storing the electric motor. A recess may be formed on the motor case, for example, so as to be opened at least downward. The transmission member may be positioned inside the recess.

The electric vehicle preferably may be a straddled vehicle, such as a motorcycle or bicycle.

It will be appreciated that features analogous to those described in relation to any of the above aspects may be individually and separably or in combination applicable to any of the other aspects.

### BRIEF DESCRIPTION OF DRAWINGS

An embodiment of the present invention will now be described, by way of example only, with reference to the accompanying drawings, which are:
- **Figure 1**: a side view of an electric vehicle according to an embodiment of the present invention;
- **Figure 2**: a side view showing enlarged a major part of the electric vehicle of Figure 1;
- **Figure 3**: a perspective view showing enlarged a major part of the electric vehicle of Figure 1; and
- **Figure 4**: a cross-sectional view of a major part of the electric vehicle of Figure 1.

### DETAILED DESCRIPTION OF DRAWINGS

An embodiment of the present invention will now be described with reference to the accompanying drawings.

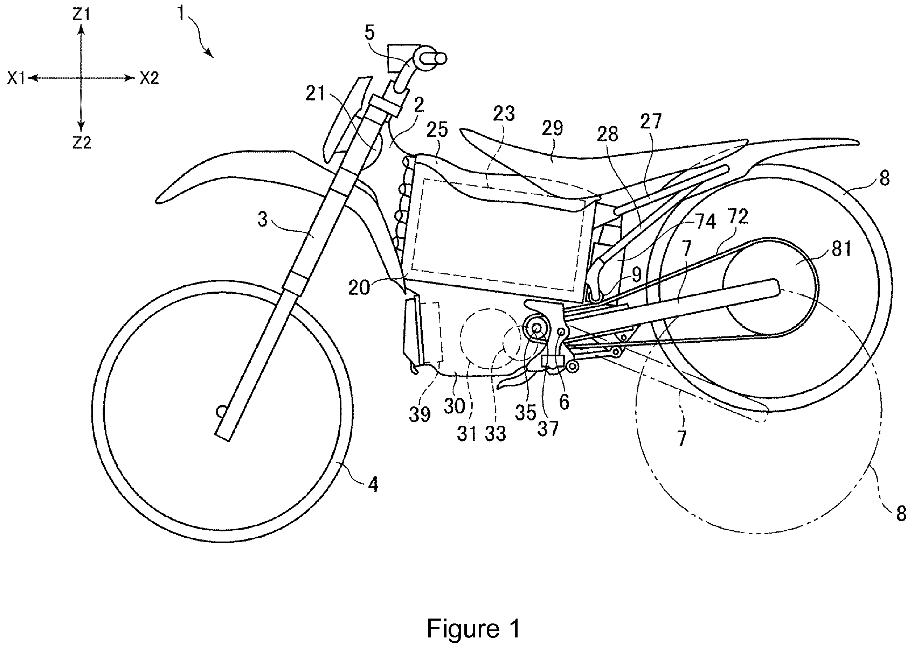

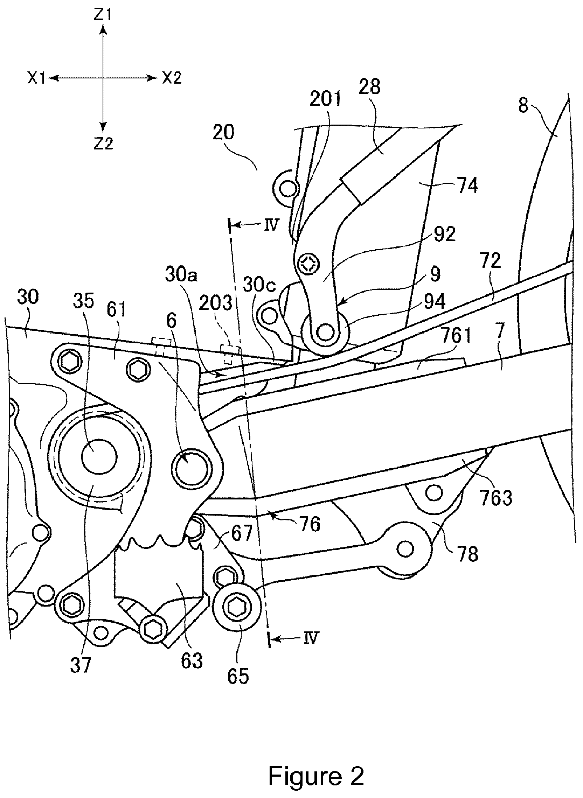

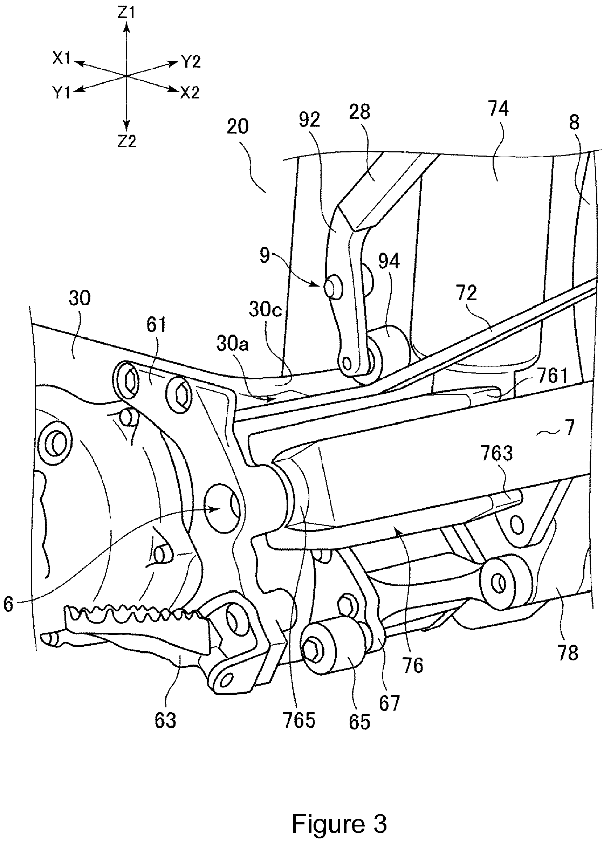

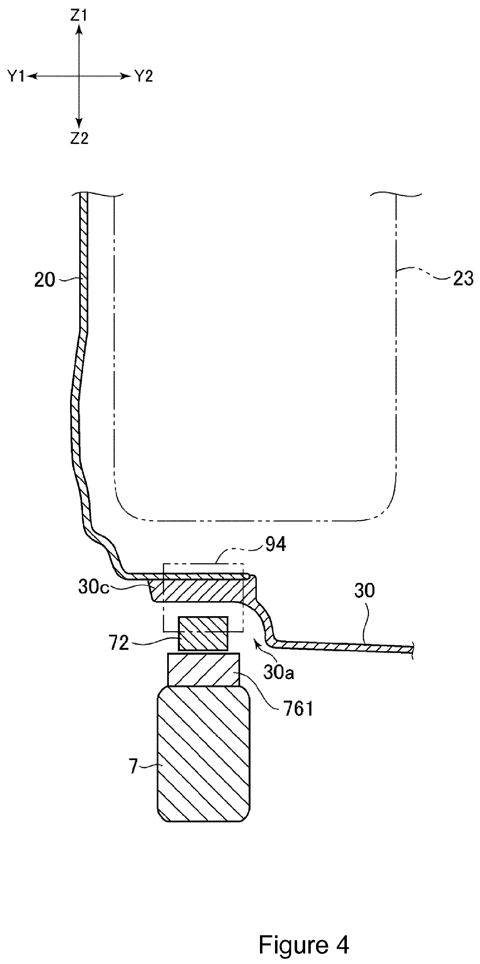

Figure 1 is a side view of an electric vehicle 1 according to one embodiment of the present invention. Figure 2 is a side view showing enlarged an area near a pivot shaft 6 of the electric vehicle 1. Figure 3 is a perspective view showing an area near the pivot shaft 6 of the electric vehicle 1 viewed from the left rear side thereof. Figure 4 is a cross-sectional view along the line IV-IV shown in Figure 2. Note that X1 and X2 shown in the respective diagrams indicate the forward and rearward directions, respectively; Y1 and Y2 indicate the leftward and rightward directions, respectively; and Z1 and Z2 indicate the upward and downward directions, respectively.

In the drawings, a swing arm 7 and a rear wheel 8 with a suspension 74 in the most contracted state are shown. In Figure 1, the swing arm 7 and the rear wheel 8 with the suspension 74 in an unloaded state are indicated by the long dashed double-short dashed line.

In this embodiment the electric vehicle 1 is a straddled electric vehicle, for example. In the following, an electric motorcycle will be described as one example of a straddled electric vehicle. This, however, is not limiting, and the electric vehicle 1 may be an electric automobile, such as a rough terrain vehicle, for example.

The electric vehicle 1 has a monocoque vehicle body frame 2, for example. A head pipe 21 is mounted on the front portion of the vehicle body frame 2, and a front fork 3 is supported on the head pipe 21 so as to rotate in the left-right direction. A front wheel 4 is mounted on the lower portion of the front fork 3, and a handle 5 for steering is mounted on the upper portion of the front fork 3. A pivot shaft 6 is mounted below the vehicle body frame 2, and a swing arm 7 is supported on the lower portion of the pivot shaft 6 so as to swing in the up-down direction. A rear wheel 8 is supported on the rear portion of the swing arm 7.

The electric vehicle 1 has an electric motor 31 as a power source for generating a driving force for driving the rear wheel 8, and a battery 23 as an energy source for supplying power to the electric motor 31. A lithium ion battery, for example, is preferable as the battery 23. The driving force of the electric motor 31 is decelerated by a decelerator 33 before being transmitted to an output shaft 35 and further to the rear wheel 8 via a transmission member 72 such as a chain, a belt or the like.

The battery 23 is stored in a battery case 20 provided below, e.g. (at least partly) directly below, the seat 29. The battery case 20 constitutes a part of the vehicle body frame 2. The battery case 20 has a box shape that is opened upward, and a cover 25 that can be opened and closed is attached to the upper portion of the battery case 20. When the seat 29 is removed and the cover 25 is opened, it is possible to access the inside of the battery case 20.

In this embodiment, the battery 23 is demounted from the battery case 20 and charged by an external charger. In this embodiment, a plurality of batteries 23 are stored in the battery case 20. The size and weight of each battery 23 is designed appropriate to be carried manually. With the above arrangement, easiness in manually carrying the battery 23 and an output and capacity necessary for the electric vehicle 1 to run are both ensured.

Behind the battery case 20, an upper rear frame 27 and a lower rear frame 28 are mounted. The upper rear frame 27 is connected to the upper portion of the rear surface of the battery case 20, while the lower rear frame 28 is connected to the lower portion of the rear surface of the battery case 20. In detail, the lower rear frame 28 is connected to the battery case 20 via an arm 92 of a movement restriction member 9 to be described later. This, however, is not limiting, and the lower rear frame 28 may be directly connected to the battery case 20 or connected to other frame member.

Below the battery case 20, a motor case 30 for storing the electric motor 31, the decelerator 33, and the output shaft 35 is mounted. In the motor case 30, a motor control unit 39 for controlling the power supplied from the battery 23 to the electric motor 31 is stored. The electric motor 31 is positioned at the middle of the motor case 30 in the front-back direction. The motor control unit 39 is positioned ahead of the electric motor 31. The output shaft 35 is positioned behind the electric motor 31. The battery case 20 and the motor case 30 are made of a metallic based material such as aluminum, iron, magnesium, or alloy of any thereof, for example.

The motor case 30 has a box shape that is opened upward, and is connected to the lower end portion of the battery case 20. Specifically, the upper edge of the motor case 30 has a shape in accordance with the lower edge of the battery case 20, and the lower edge of the battery case 20 and the upper edge of the motor case 30 are put or abutted together and fixed to each other by a fixing means, such as a screw 203 in the inside of the battery case 20. With the above, as the electric motor 31 or the like stored in the motor case 30 is positioned below, i.e. directly below, the battery case 20; it is thereby possible to achieve size reduction of the electric vehicle 1 in the front-back direction.

As shown in Figures 1 and 2, the output shaft 35 is positioned lower than the lower end of the battery case 20 and more forward than the rear end of the battery case 20 in a side view. On the left end portion of the output shaft 35 that is exposed outside the motor case 30, a driving side rotating member 37, such as a sprocket, a pulley, or the like, for transmitting a driving force of the output shaft 35 to an endless transmission member 72, such as a chain, a belt, or the like, is mounted.

On the left surface and the right surface of the motor case 30, a pair of brackets 61 are mounted, and the pivot shaft 6 is mounted in a position between the pair of left and right brackets 61 behind the motor case 30. The bracket 61 has a substantial U-shape that projects rearward, and is fixed to the side surface of the motor case 30 on the upper and lower portions thereof by a screw or the like. The portion projecting rearward of the bracket 61 is connected to the pivot shaft 6. Further, a footrest 63 is mounted on the lower portion of the bracket 61.

As shown in Figures 1 and 2, the pivot shaft 6 is also positioned lower than the lower end of the battery case 20 more forward than the rear end of the battery case 20 in a side view. The pivot shaft 6 is positioned behind the output shaft 35 in a side view such that the upper portion and lower portion of the bracket 61 sandwich the output shaft 35 in the up-down direction in a side view. The bracket 61 mounted on the left side surface of the motor case 30 is positioned more leftward than the driving side rotating member 37 and the transmission member 72.

On the pivot shaft 6, the front end portion of the swing arm 7 is supported so as to rotate so that the swing arm 7 can swing in the up-down direction with the pivot shaft 6 as the center. The suspension 74 is present between the vehicle body frame 2 and the swing arm 7. In this embodiment, the suspension 74 is positioned behind the battery case 20 and can extract or contract in the up-down direction. The upper end portion of the suspension 74 is connected to the upper rear frame 27, while the lower end portion of the same is connected to the swing arm 7 via a link 78.

The endless transmission member 72 is wound around the driving side rotating member 37 mounted on the output shaft 35 and a following side rotating member 81, such as a sprocket, a pulley, or the like, mounted on the rear wheel 8. A driving force from the output shaft 35 is transmitted from the driving side rotating member 37 mounted on the output shaft 35 to the transmission member 72 and further to the following side rotating member 81, and the rear wheel 8 resultantly rotates. The transmission member 72 swings in the up-down direction together with the swing arm 7.

As shown in Figures 2 and 4, the transmission member 72 is positioned so as to travel below the lower left rear portion of the battery case 20. In this embodiment, the entire transmission member 72 in the left-right direction is fully overlapped by the battery case 20 in a plan view. With this, it is possible to reduce the size of the electric vehicle 1 in the left-right direction. This, however, is not limiting, and only a part of the transmission member 72 in the left-right direction may be overlapped by the battery case 20 in a plan view.

Further, a recess 30a is formed on the upper left rear portion of the motor case 30 so as to be opened downward and leftward. The transmission member 72 is positioned in the recess 30a. The recess 30a is formed so that the transmission member 72 does not touch the motor case 30. Specifically, the recess 30a is formed so that the transmission member 72 when having moved upward to touch a (touch) portion 94 of the movement restriction member 9 (to be described later) does not touch a part above the recess 30a. The part above the recess 30a corresponds to a connection portion 30c that is connected to the lower left rear end portion of the battery case 20.

A substantially U-shaped seal guard 76 - which sandwiches the swing arm 7 in the up-down direction - is supported on the pivot shaft 6 so as to swing in the up-down direction. The seal guard 76 has a pair of arms 761, 763 that are branched upward and downward, respectively, from a ring-like shaft portion 765 and extending rearward, the ring-like shaft portion 765 being supported so as to rotate on the pivot shaft 6. The arms 761, 763 cover the top and bottom respective surfaces of a part of the swing arm 7 near the pivot shaft 6 to thereby prevent the transmission member 72 from directly touching the swing arm 7.

Below the seal guard 76, a chain roller 65 for preventing the transmission member 72 from deflecting is mounted. The chain roller 65 is positioned behind and below the pivot shaft 6 in a side view, and fixed to the motor case 30 via a bracket 67. The chain roller 65 touches the transmission member 72 to apply tension when the swing arm 7 is on or near a straight line connecting the output shaft 35 and the pivot shaft 6. While the swing arm 7 is going to the highest position (the position where the suspension 74 is in the most contracted state), the chain roller 65 departs from the transmission member 72.

In this embodiment, the output shaft 35 is positioned lower than the lower end of the battery case 20 and more forward than the rear end of the same in a side view, as described above. Therefore, it is necessary to ensure clearance between the transmission member 72 that swings in the up-down direction together with the swing arm 7 and the lower left rear end portion of the battery case 20. However, in an attempt to reduce further the size of the front-back length of the electric vehicle 1, to enlarge the battery 23 in the front-back direction in order to ensure larger capacity, or to mount the battery 23 in a lower position to ensure lower barycenter, this clearance tends to decrease.

In view of the above, in this embodiment, the movement restriction member 9 to be described later is provided to prevent the transmission member 72 swinging in the up-down direction from touching the lower left rear end portion of the battery case 20 or the connection portion 30c of the motor case 30 connected to the lower left rear end portion. Note that the description below is focused on the connection portion 30c of the motor case 30 connected to the lower left rear end portion of the battery case 20.

The movement restriction member 9 has an arm 92 mounted on the vehicle body frame 2 and the touch portion 94 supported by the arm 92. The touch portion 94 is a chain roller supported so as to rotate on the lower end portion of the arm 92, for example. This, however, is not limiting, and the touch portion 94 may be a chain slider fixed to the lower end portion of the arm 92, for example. The touch portion 94 can be made of rubber, for example.

The arm 92 is mounted on the front end portion of the lower rear frame 28 and extends downward. The arm 92 is mounted also on the lower portion of the rear surface of the battery case 20 so as to be present between the lower rear frame 28 and the battery case 20. Specifically, the upper end portion of the arm 92 is fixed to the front end portion of the lower rear frame 28 by means of welding or the like, and a middle portion of the arm 92 is fixed to a bracket 201 mounted on the lower portion of the rear surface of the battery case 20 by a screw or the like. The arm 92 is mounted on the vehicle body frame 2 or a member fixed to the vehicle body frame 2. That is, the arm 92 is fixed to a member that does not swing relative to the vehicle body frame 2.

The position where the arm 92 is mounted is not limited to any particular position, as long as the position allows the touch portion 94 to be positioned so as to prevent the transmission member 72 from touching the connection portion 30c of the motor case 30. For example, the arm 92 may be mounted on a middle portion or rear end portion of the lower rear frame 28 or on the upper rear frame 27. Alternatively, the arm 92 may be mounted alone on the battery case 20. In the case where the battery case 20 does not constitute a part of the vehicle body frame 2, the arm 92 can be mounted on the battery case 20.

The touch portion 94 touches the transmission member 72 to thereby locally restrict upward movement of the transmission member 72, and further to prevent the transmission member 72 from touching the connection portion 30c of the motor case 30.

The touch portion 94 touches the transmission member 72 in a position more rearward than the rear end of the battery case 20. The touch portion 94 is positioned more rearward than the rear end of the battery case 20 and more forward than the rear wheel 8. In order to prevent touch between the transmission member 72 and the connection portion 30c of the motor case 30, it is preferable that the touch portion 94 is positioned near the rear end of the battery case 20. For example, the touch portion 94 may be positioned more forward than the rear end of the seal guard 76 or positioned overlapping the suspension 74 in a side view. Note that the touch portion 94 may be positioned more forward than the rear end of the battery case 20 and lower than the lower end of the same. However, in order to ensure lower barycenter, it is preferable that the touch portion 94 is positioned more rearward than the rear end of the battery case 20.

At least when the swing arm 7 is at the highest position (the position where the suspension 74 is in the most contracted state), the touch portion 94 touches the transmission member 72. For example, the touch portion 94 touches the transmission member 72 only when the swing arm 7 is in the highest position or a position near the highest position, and does not touch the transmission member 72 when the swing arm 7 is positioned lower than the highest position. With the above, as the touch portion 94 does not touch the transmission member 72 in a normal state in which a relatively large load is not applied to the suspension 74, it is possible to prevent abrasion of the touch portion 94. This, however, is not limiting, and the touch portion 94 may touch the transmission member 72 in a normal state.

The touch portion 94 is positioned so as to touch the transmission member 72 prior to the connection portion 30c of the motor case 30 while the swing arm 7 is moving upward. For example, the touch portion 94 is positioned lower than the connection portion 30c of the motor case 30 in the circumferential direction with the output shaft 35 (or the upper end of the driving side rotating member 37) as the center. Further, the touch portion 94 may be positioned higher than the lower end of the battery case 20 as long as the touch portion 94 touches the transmission member 72 prior to the battery case 20 while the swing arm 7 is moving upward.

Further, it is preferable that the touch portion 94 does not simultaneously touch the transmission member 72 with the chain roller 65. That is, it is preferable that the touch portion 94 touches the transmission member 72 after the chain roller 65 departs from the transmission member 72 while the swing arm 7 is moving upward. With the above, it is beneficially possible to prevent excessive increase of the tension of the transmission member 72 due to the chain roller 65 and the touch portion 94 simultaneously touching the transmission member 72.

As described above, in this embodiment, the movement restriction member 9 is provided to advantageously prevent the transmission member 72 from touching the connection portion 30c of the motor case 30. This can increase freedom in layout. That is, without restriction due to touch between the transmission member 72 and the connection portion 30c of the motor case 30, it is possible to reduce the front-back length of the electric vehicle 1, to enlarge the battery 23 in the front-back direction in order to ensure a larger capacity, and to mount the battery 23 in a lower position to ensure low barycenter. Further, it is not necessary to limit the movement range of the swing arm 7.

Although an embodiment of the present invention has been described in the above, the present invention is not limited to the above described embodiment, and various modified embodiments are possible for a person skilled in the art.

It will be appreciated that the embodiment of the present invention hereinbefore described is given by way of example only, and is not intended to limit the scope of the invention in any way.

It will be appreciated that the term straddled vehicle or motor vehicle used herein, and as used in the art, is meant to include the following terms also used in the art:
straddle-type vehicle or motor vehicle, saddle-ride type vehicle or motor vehicle, saddle-straddling type vehicle or motor vehicle, and includes: motorcycles and motorbikes as well as motor tricycles, quadbikes, All Terrain Vehicles (ATVs), scooters, mopeds and snowmobiles.

## Claims

1. An electric vehicle (1) comprising:
a vehicle body frame (2),
a swing arm (7) supported on the vehicle body frame via a pivot shaft (6) so as to swing in an up-down direction,
a rear wheel (8) supported on the swing arm,
an electric motor (31),
an output shaft (35) to which a driving force of the electric motor is transmitted,
an endless transmission member (72) for transmitting a driving force outputted from the output shaft to the rear wheel,
a battery (23) for supplying power to the electric motor, and
a battery case (20) for storing the battery, wherein
the output shaft is positioned lower than a lower end of the battery case and more forward than a rear end of the battery case in a side view, and
a movement restriction member (9) for touching the transmission member to restrict upward movement of the transmission member is mounted on the vehicle body frame or a member fixed to the vehicle body frame.

2. The electric vehicle according to claim 1, wherein the pivot shaft is positioned lower than the lower end of the battery case and more forward than the rear end of the battery in a side view.

3. The electric vehicle according to any preceding claim, wherein the transmission member and the battery case at least partially overlap each other in a plan view.

4. The electric vehicle according to any preceding claim, wherein the movement restriction member touches the transmission member at a position more rearward than the rear end of the battery case.

5. The electric vehicle according to any preceding claim, further comprising a suspension positioned between the vehicle body frame and the swing arm, wherein
the movement restriction member touches the transmission member at least when the suspension is in a most contracted state.

6. The electric vehicle according to any preceding claim, wherein the movement restriction member is positioned lower than the battery case in a circumferential direction with the output shaft as a center.

7. The electric vehicle according to any preceding claim, wherein
the vehicle body frame includes a rear frame diagonally extending rearward and upward from a position behind the battery case, and
the movement restriction member is mounted on a front end portion of the rear frame.

8. The electric vehicle according to any preceding claim, wherein the movement restriction member is mounted on the battery case.

9. The electric vehicle according to any preceding claim, further comprising:
a motor case (30) for storing the electric motor, wherein
a lower edge of the battery case and an upper edge of the motor case are put together or arranged in abutment with one another or placed together in intimate contact.

10. The electric vehicle according to any preceding claim, further comprising:
a motor case for storing the electric motor, wherein
a recess (30a) is formed on the motor case so as to be opened at least downward, and
the transmission member is positioned inside the recess.
